Europäisches Patentamt

European Patent Office

Office européen des brevets

(19)

(11) **EP 1 669 237 A2**

(12) **EUROPEAN PATENT APPLICATION**

(43) Date of publication:
**14.06.2006 Bulletin 2006/24**

(51) Int Cl.:
**B60K 23/08** (2006.01)

(21) Application number: **05017381.4**

(22) Date of filing: **10.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **13.12.2004 JP 2004359537**

(71) Applicant: **Hitachi, Ltd.**
**Tokyo 100-8280 (JP)**

(72) Inventors:
  • **Matsuzaki, Norikazu**
    **Hitachi, Ltd.**
    **12th Floor**
    **Chiyoda-ku**
    **Tokyo 100-8220 (JP)**
  • **Itoh, Kohei**
    **Hitachinaka-shi**
    **Ibaraki 312-0062 (JP)**

(74) Representative: **Beetz & Partner**
    **Steinsdorfstrasse 10**
    **D-80538 München (DE)**

(54) **Vehicle driving force control system**

(57)     The invention relates to a vehicle driving force control system capable of reducing a shock caused at the time of clutch release. At the time of a shift from a 4-wheel-drive state to a 2-wheel-drive state, a motor rotation angle control unit brings a clutch (4) into a released state when a clutch angle of an engagement portion of the clutch (4) is within a predetermined range. Also, at the time of a shift from the 4-wheel-drive state to the 2-wheel-drive state, the motor rotation angle control unit controls an output torque of a motor (5) so that the clutch angle of the engagement portion of the clutch (4) takes a predetermined value within the predetermined range.

FIG.1

**Description**

BACKGROUND OF THE INVENTION

1. Field of the Invention

The present invention relates to a control system for a 4-wheel-drive vehicle capable of driving main drive wheels by a main drive source and driving sub-drive wheels by a sub-drive source. More particularly, the present invention relates to a vehicle driving force control system suitable for controlling the connected (engaged) or released (disengaged) state of a clutch disposed in a torque transmission path between the sub-drive source and the sub-drive wheels.

2. Description of the Related Art

Hitherto, in a 4-wheel-drive vehicle capable of driving main drive wheels by a main drive source and driving sub-drive wheels by a sub-drive source, a control system has been used which controls a clutch disposed in a torque transmission path between the sub-drive source and the sub-drive wheels. In such a control system, as disclosed in, e.g., JP-A-2004-82842, it is known to release the clutch when a torque reaches an amount corresponding to the friction caused in a torque transmission path from the sub-drive source to the clutch.

SUMMARY OF THE INVENTION

While JP-A-2004-82842 states that the clutch is released when a torque reaches an amount corresponding to the friction caused in the torque transmission path from the sub-drive source (motor) to the clutch, the friction is attributable to oil used in the torque transmission path. Further, a temperature characteristic and a viscosity deterioration characteristic of the oil are not explained in JP-A-2004-82842. Therefore, it is impossible to compute an accurate friction torque, thus resulting in a possibility that a shock is generated at the time of clutch release. Another problem is that, because the load of the sub-drive source is reduced after the clutch release, the motor serving as the sub-drive source may be broken with an abrupt increase in rotation speed of the motor.

An object of the present invention is to provide a vehicle driving force control system capable of reducing a shock at the time of clutch release.

Another object of the present invention is to provide a vehicle driving force control system capable of preventing an abrupt increase in rotation speed of a sub-drive source.

According to the present invention, a clutch is released by controlling the sub-drive source to be rotated at the time of clutch release such that a clutch engagement portion takes an angle suitable for the clutch release. As a result, a shock caused when bringing the clutch into the released state can be avoided. Also, it is possible to avoid an abrupt increase in rotation speed of the sub-drive source, which is caused with a reduction in load of the sub-drive source after the clutch release.

(1) To achieve the above objects, the present invention may provide a vehicle driving force control system for controlling a vehicle which may comprise main drive wheels driven by a main drive source, sub-drive wheels driven by a sub-drive source, and/or a clutch disposed in a torque transmission path between the sub-drive source and the sub-drive wheels, the clutch being controlled to be engaged in a 4-wheel-drive state and released in a 2-wheel-drive state, wherein the control system may include a clutch release unit for, at the time of a shift from the 4-wheel-drive state to the 2-wheel-drive state, bringing the clutch into the released state when a clutch angle of an engagement portion of the clutch is within a predetermined range.

With that feature, a shock caused at the time of the clutch release can be reduced.

(2) In above (1), preferably, the control system may further include a rotation angle control unit for, at the time of a shift from the 4-wheel-drive state to the 2-wheel-drive state, controlling an output torque of the sub-drive source so that the clutch angle of the engagement portion of the clutch takes a predetermined value within the predetermined range.

With that feature, an abrupt increase in rotation speed of the sub-drive source the time of the clutch release can be prevented.

(3) In above (2), preferably, the rotation angle control unit increases a voltage or current of a motor serving as the sub-drive source when a rotation speed of the sub-drive source is larger than a rotation speed of the sub-drive wheels in the engagement portion of the clutch, and decreases the voltage or current of the motor serving as the sub-drive source when the rotation speed of the sub-drive source is smaller than the rotation speed of the sub-drive wheels.

(4) In above (2), preferably, the rotation angle control unit continues the output torque control for the sub-drive source after outputting of a clutch release command from the clutch release unit until the clutch is actually released.

(5) To achieve the above objects, the present invention may also provide a vehicle driving force control system for controlling a vehicle which may comprise main drive wheels driven by a main drive source, sub-drive wheels driven by a sub-drive source, and/or a clutch disposed in a torque transmission path between the sub-drive source and the sub-drive wheels, the clutch being controlled to be engaged in a 4-wheel-drive state and released in a 2-wheel-drive state, wherein the control system includes a clutch release unit for, at the time of a shift from the 4-wheel-drive state to the 2-wheel-drive state, bringing the clutch into the released state after synchronizing rotation of the sub-drive source and rotation of the sub-drive wheels with each other.

With that feature, a shock caused at the time of the clutch release can be reduced.

According to the present invention, a shock caused at the time of clutch release can be reduced. Also, an abrupt increase in rotation speed of the sub-drive source can be avoided.

The above features can be combined in any way in part or as a whole without departing from the original disclosure.

BRIEF DESCRIPTION OF THE DRAWINGS

Fig. 1 is a system block diagram showing the overall construction of a 4-wheel-drive vehicle using a vehicle driving force control system according to one embodiment of the present invention;

Fig. 2 is a system block diagram showing the construction of the vehicle driving force control system according to one embodiment of the present invention;

Fig. 3 is a block diagram showing a motor torque computing unit in the vehicle driving force control system according to one embodiment of the present invention;

Fig. 4 is a characteristic graph showing the operation of an accelerator responsive torque computing unit in the motor torque computing unit of the vehicle driving force control system according to one embodiment of the present invention;

Fig. 5 is a characteristic graph showing the operation of a slip responsive torque computing unit in the motor torque computing unit of the vehicle driving force control system according to one embodiment of the present invention;

Fig. 6 is a timing chart showing the operation of an operation mode determining unit in the vehicle driving force control system according to one embodiment of the present invention when the vehicle runs on a dry road;

Fig. 7 is a timing chart showing the operation of the operation mode determining unit in the vehicle driving force control system according to one embodiment of the present invention when the vehicle runs on a low-$\mu$ road;

Fig. 8 is a block diagram showing a driver unit in the vehicle driving force control system according to one embodiment of the present invention;

Fig. 9 is a flowchart showing the operation of a motor rotation angle control unit in the driver unit of the vehicle driving force control system according to one embodiment of the present invention;

Fig. 10 is a motor torque computing map for use in a motor torque computing process executed by the motor rotation angle control unit in the driver unit of the vehicle driving force control system according to one embodiment of the present invention;

Fig. 11 is a map showing a clutch characteristic of the vehicle driving force control system according to one embodiment of the present invention; and

Fig. 12 is a timing chart showing control procedures of the motor rotation angle control unit in the driver unit of the vehicle driving force control system according to one embodiment of the present invention.

DESCRIPTION OF THE PREFERRED EMBODIMENTS

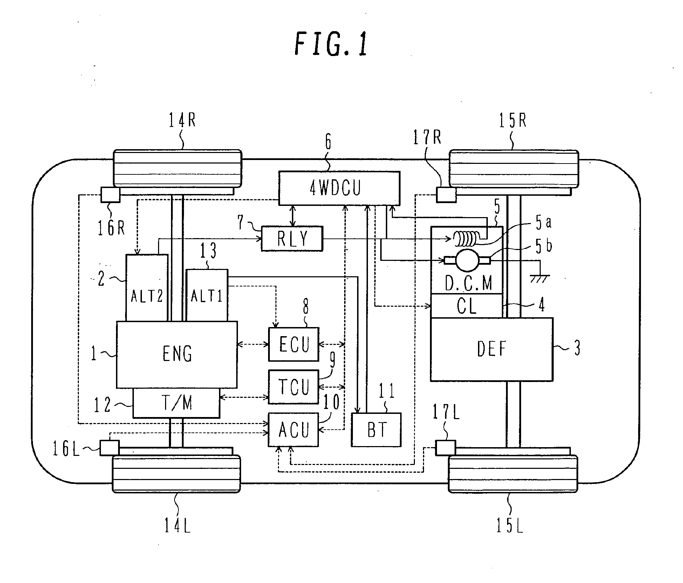

The construction and operation of the vehicle driving force control system according to one embodiment of the present invention will be described below with reference to Figs. 1 through 10.

With reference to Fig. 1, a description is first made of the overall construction of a 4-wheel-drive vehicle using the vehicle driving force control system of this embodiment.

Fig. 1 is a system block diagram showing the overall construction of the 4-wheel-drive vehicle using the vehicle driving force control system according to one embodiment of the present invention.

The 4-wheel-drive (4WD) vehicle comprises an engine (ENG) 1 and a motor (D.C.M) 5. A driving force of the engine 1 is transmitted to right and left front wheels 14R, 14L through a transmission (T/M) 12 and a first wheel axle, thereby driving the front wheels 14R, 14L.

Also, a driving force of the motor 5 is transmitted to right and left rear wheels 15R, 15L through a clutch (CL) 4, a differential gear (DEF) 3, and a second wheel axle, thereby driving the rear wheels 15R, 15L. More specifically, when the clutch 4 is engaged (connected), a torque of the motor 5 is transmitted to a rear wheel axle through the clutch 4 and the differential gear 3, thereby driving the rear wheels 15R, 15L. When the clutch 4 is released (disengaged), the motor 5 is mechanically disconnected from the rear wheels 15R, 15L so that the rear wheels 15R, 15L transmit no driving forces to the road surface. The engagement and release of the clutch 4 are controlled by a 4WD control unit (4WDCU) 6. The motor 5 is, for example, a separately excited direct-current (DC) motor or a DC shunt-wound motor capable of being easily switched over between forward and backward rotation. As an alternative, a 3-phase synchronous motor may also be used.

While the front wheels 14R, 14L are driven by the engine 1 and the rear wheels 15R, 15L are driven by the motor 5 in the above-described 4-wheel-drive vehicle, it is also possible to drive the front wheels by:the motor and the rear wheels by the engine.

In an engine room, there are disposed an accessory generator (ALT1) 13 and an accessory battery (BT)·11 which serve as an ordinary charging and generating system. The accessory generator 13 is driven by the engine 1 through a belt, and an output of the accessory generator 13 is stored in the accessory battery 11.

Further, a high-output generator (ALT2) 2 is disposed near the accessory generator 13. The high-output generator (ALT2) 2 is driven by the engine 1 through a belt, and the motor 5 is driven by an output of the high-output generator (ALT2) 2. Power generated by the high-output generator (ALT2) 2 is controlled by the 4WDCU 6. When the power generated by the high-output generator (ALT2) 2 changes, a motor torque, i.e., an output of the motor 5, is also changed. More specifically, the power generated by the high-output generator (ALT2) 2 is changed by the 4WDCU 6 issuing an output command value (i.e., a duty signal that provides a field current value of the high-output generator at a predetermined value) to the high-output generator (ALT2) 2. The power generated by the high-output generator (ALT2) 2 is applied to an armature coil 5b of the motor 5 to change the output of the motor 5 (i.e., the motor torque). The 4WDCU 6 controls the output (generation power) of the high-output generator 2, to thereby control the output of the motor 5 (i.e., the motor torque). Further, in a region where the motor 5 is rotated at high speed, the 4WDCU 6 performs field control by weakening a field current applied to a field coil 5a of the motor 5, whereby the motor 5 is directly controlled so that the motor 5 is able to rotate at high speed.

The output of the engine 1 is controlled by an electronically controlled throttle (not shown) that is driven by a command issued from an engine control unit (ECU) 8. The electronically controlled throttle is provided with an accelerator opening sensor (not shown) for controlling the accelerator opening (throttle opening). Alternatively, when an accelerator pedal and a throttle both mechanically linked with each other are employed instead of the electronically controlled throttle, the accelerator opening sensor can be provided on the accelerator pedal. Further, a transmission control unit (TCU) 9 controls the transmission 12. An output of the accelerator opening sensor is taken into the 4WDCU 6.

The front wheels 14R, 14L and the rear wheels 15R, 15L are provided with wheel speed sensors 16R, 16L, 17R and 17L for detecting respective rotation speeds. Further, a brake is provided with an antilock braking actuator that is controlled by an antilock braking control unit (ACU) 10.

Signal lines may be connected to the 4WD control unit (4WDCU) 6 from respective interfaces of the engine control unit (ECU) 8, the transmission control unit (TCU) 9, and other control units via an inside-car LAN (CAN) bus.

A large-capacity relay (RLY) 7 is disposed between the high-output generator 2 and the motor 5 to be able to cut off the output of the high-output generator 2. Opening and closing of the relay 7 is controlled by the 4WDCU 6.

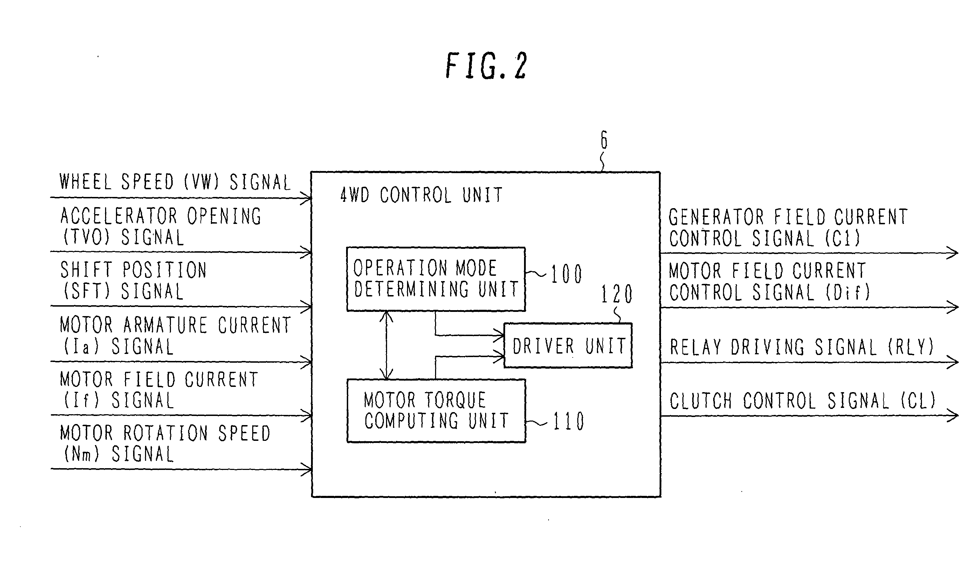

The construction of the vehicle driving force control system of this embodiment will be described below with reference to Fig. 2.

Fig. 2 is a system block diagram showing the construction of the vehicle driving force control system according to one embodiment of the present invention.

The 4WDCU 6 comprises an operation mode determining unit 100, a motor torque computing unit 110, and a driver unit 120. The 4WDCU 6 receive, as input signals, a wheel speed (VW) signal, an accelerator opening (TVO) signal, a shift position (SFT) signal, a motor armature current (Ia) signal, a motor field current (If) signal, and a motor rotation speed (Nm) signal.

The wheel speed (VW) signal is made up of a front right wheel speed VWF_RH, a front left wheel speed VWF_LH, a rear right wheel speed VWR_RH, and a rear left wheel speed VWR_LH which are detected respectively by the wheel speed sensors 16R, 16L, 17R, and 17L. The 4WDCU 6 computes therein a rear wheel average speed VWR given as an average value of the rear right wheel speed VWR_RH and the rear left wheel speed VWR_LH.

The accelerator opening (TVO) signal is received as the output of the accelerator opening sensor. The 4WDCU 6 produces an accelerator turning-on signal when the accelerator opening (TVO) signal shows an accelerator opening of 3%, and produces an accelerator turning-off signal when the accelerator opening is less than 3%. As an alternative, a threshold for use in the turning-on/off determination may be given with a hysteresis characteristic by setting the threshold to 3% that is used when an accelerator is determined as being turned on, and to 1% that is used when the accelerator is determined as being turned off.

The shift position (SFT) signal is received as an output of a shift position sensor disposed near a shift lever.

Herein, the 4WDCU 6 receives, as the shift position (SFT) signal, a signal indicating whether the shift position is in a D (drive) range or in other ranges.

The motor armature current (Ia) signal represents an output current of the high-output generator (ALT2) 2, i.e., a current flowing through the armature coil 5b of the motor 5. The motor field current (If) signal represents a field current flowing through the field coil 5a of the motor 5. The motor rotation speed (Nm) signal is a signal indicating the rotation speed of the motor 5.

The operation mode determining unit 100 determines one of 4-wheel-drive modes based on the wheel speed (VW) signal, the accelerator opening (TVO) signal, and the shift position (SFT) signal. The modes to be determined include a 2WD mode (operation mode 2), a 4WD standby mode (operation mode 3), a vehicle creep mode (operation mode 4), a 4WD mode (operation mode 5), and a stop sequence mode (operation mode 6).

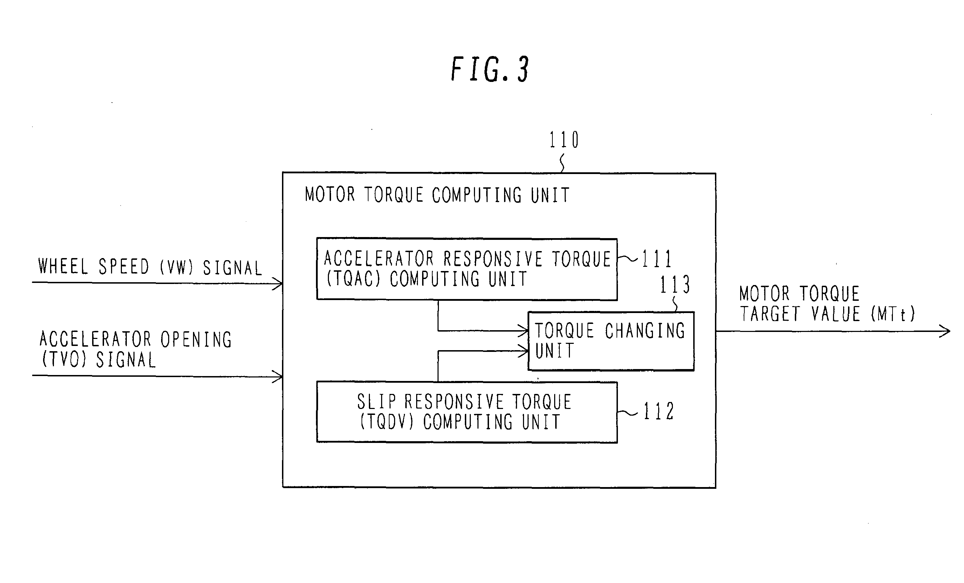

The motor torque computing unit 110 computes a required motor torque depending on a vehicle speed or a difference in wheel speed between the front and rear wheels. Details of the motor torque computing unit 110 will be described later with reference to Fig. 3.

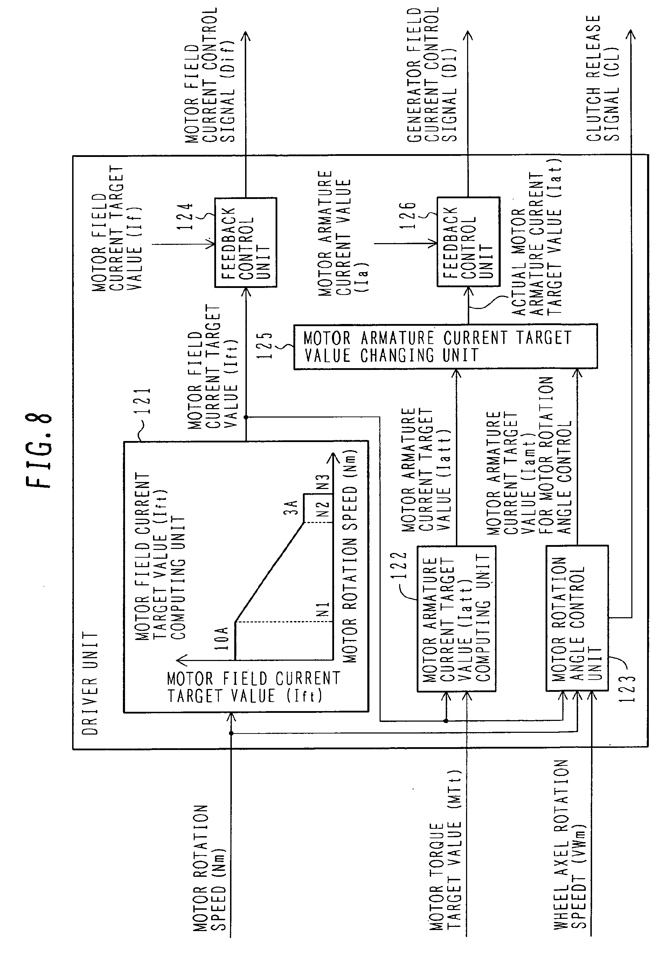

The driver unit 120 outputs, in accordance with the operation mode (one of the operation modes 1, 2,..., 6) determined by the operation mode determining unit 100 and the motor torque computed by the motor torque computing unit 110, a generator field current control signal (C1) for controlling a field current flowing through a field coil 5b of the high-output generator (ALT2) 2, a motor field current control signal (Dif) for controlling the field current flowing through the field coil 5a of the motor 5, a relay driving signal (RLY) for controlling opening/closing of the relay 7, and a clutch control signal (CL) for controlling engagement/release of the clutch 4. Details of the driver unit 120 will be described later with reference to Fig. 8.

The configuration of the motor torque computing unit 110 in the vehicle driving force control system of this embodiment will be described below with reference to Fig. 3.

Fig. 3 is a block diagram showing the configuration of a motor torque computing unit in the vehicle driving force control system according to one embodiment of the present invention.

The motor torque computing unit 110 comprises an accelerator responsive torque (TQAC) computing unit 111, a slip responsive torque (TQDV) computing unit 112, and a torque changing unit 113.

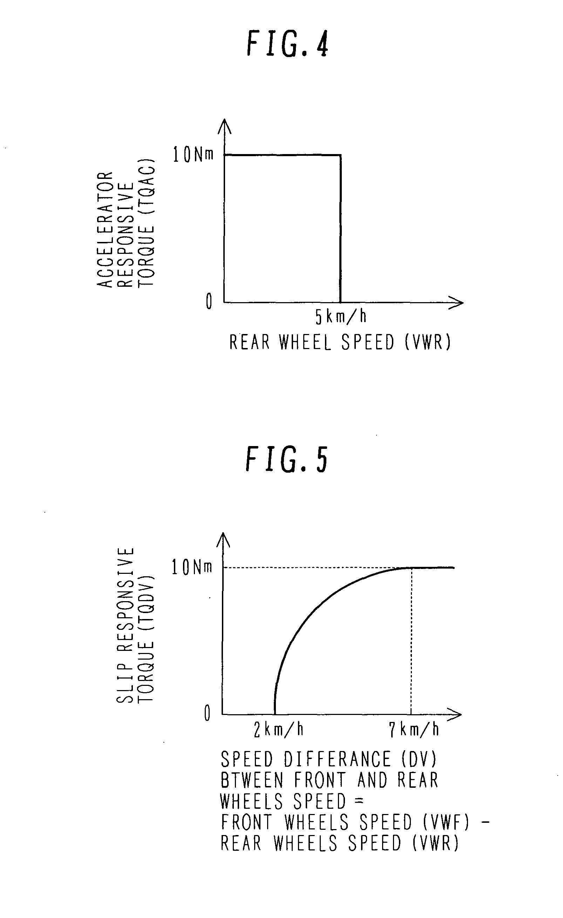

The accelerator responsive torque (TQAC) computing unit 111 computes a torque to be outputted by the motor 5 when the vehicle runs on a dry road or the like. A torque computing process executed by the accelerator responsive torque (TQAC) computing unit 111 will be described later with reference to Fig. 4. The slip responsive torque (TQDV) computing unit 112 computes a torque to be outputted by the motor 5 when a wheel slip is detected on a low-$\mu$ road or the like. A torque computing process executed by the slip responsive torque (TQDV) computing unit 112 will be described later with reference to Fig. 5. The torque changing unit 113 outputs, as a motor torque target value (MTt), a larger one between the accelerator responsive torque (TQAC) computed by accelerator responsive torque (TQAC) computing unit 111 and the slip responsive torque (TQDV) computed by the slip responsive torque (TQDV) computing unit 112.

The operation of the accelerator responsive torque (TQAC) computing unit 111 in the motor torque computing unit 110 of the vehicle driving force control system of this embodiment will be described below with reference to Fig. 4.

Fig. 4 is a characteristic graph for explaining the torque computing process executed by the accelerator responsive torque (TQAC) computing unit in the motor torque computing unit of the vehicle driving force control system according to one embodiment of the present invention.

In Fig. 4, the horizontal axis represents the rear wheel speed (VWR). The rear wheel speed (VWR) is an average value of the rear right and left wheel speeds VWR_RH and VWR_LH detected respectively by the rear wheel speed sensors 17R, 17L. The vertical axis in Fig. 4 represents the accelerator responsive torque (TQAC).

As shown in Fig. 4, when the rear wheel speed (VWR) is not higher than 5 km/h, the accelerator responsive torque (TQAC) computing unit 111 outputs 10 Nm, for example, as the accelerator responsive torque (TQAC). When the rear wheel speed (VWR) is higher than 5 km/h, the accelerator responsive torque (TQAC) computing unit 111 outputs 0 Nm, for example, as the accelerator responsive torque (TQAC).

The operation of the slip responsive torque (TQDV) computing unit 112 in the motor torque computing unit 110 of the vehicle driving force control system of this embodiment will be described below with reference to Fig. 5.

Fig. 5 is a characteristic graph for explaining the torque computing process executed by the slip responsive torque (TQDV) computing unit in the motor torque computing unit of the vehicle driving force control system according to one embodiment of the present invention.

In Fig. 5, the horizontal axis represents a speed difference (DV) between the front and rear wheels. The front-and-rear wheel speed difference (DV) is determined as (the front wheel speed (VWF) - the rear wheel speed (VWR)). The vertical axis in Fig. 5 represents the slip responsive torque (TQDV).

As shown in Fig. 5, when the front-and-rear wheel speed difference (DV) is smaller than 2 km/h, the slip responsive torque (TQDV) computing unit 112 outputs 0 Nm, for example, as the slip responsive torque (TQDV). When the front-and-rear wheel speed difference (DV) is in the range of 2 km/h to 7 km/h, the slip responsive torque (TQDV) computing unit 112 outputs, as the slip responsive torque (TQDV), a torque that increases from 0 Nm to 10 Nm, as shown by way of example, depending on the front-and-rear wheel speed difference (DV). When the front-and-rear wheel speed difference (DV) is larger than 7 km/h, the slip responsive torque (TQDV) computing unit 112 outputs 10 Nm, for example, as the slip responsive torque (TQDV).

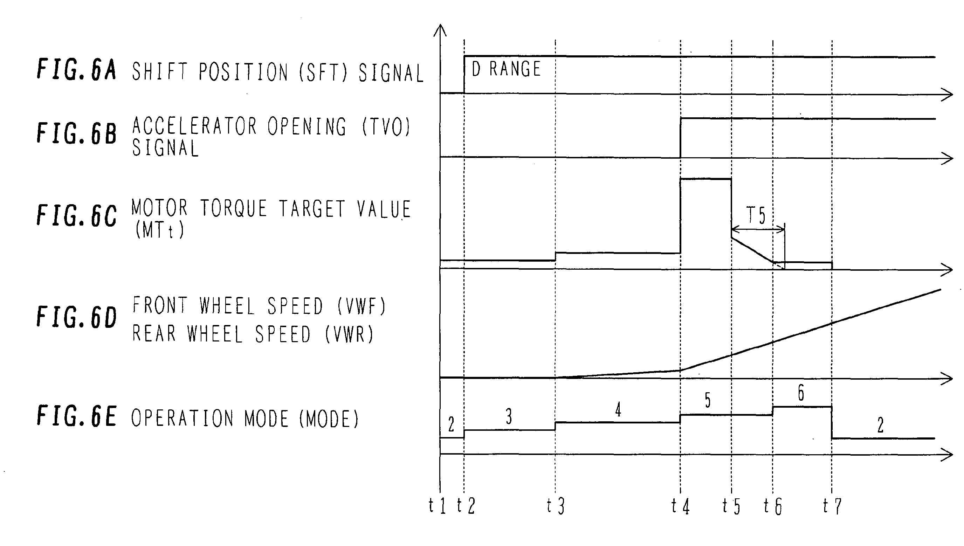

With reference to Fig. 6, a description is now made of the operation of the vehicle driving force control system of this embodiment when the vehicle runs on a dry road.

Fig. 6 is a timing chart showing the operation of the vehicle driving force control system according to one embodiment of the present invention when the vehicle runs on a dry road. In Fig. 6, (A) represents the shift position (SFT) signal, (B) represents the accelerator opening (TVO) signal, and (C) represents the motor torque target value (MTt). Further, (D) in Fig. 6 represents the front wheel speed (VWF) and the rear wheel speed (VWR), and (E) represents the operation mode (MODE).

As shown in Fig. 6, at a time t1, when the shift position (SFT) signal indicates a neutral range or a parking range, the operation mode determining unit 100 determines the operation mode (MODE) to be the operation mode 2 (MODE2), i.e., the 2WD mode. At this time, the motor torque computing unit 110 computes 0 Nm, for example, as the motor torque target value (MTt).

At a time t2, when the 4WDCU 6 detects that the shift position (SFT) signal indicates the drive range, the operation mode determining unit 100 determines the operation mode (MODE) to be the operation mode 3 (MODE3), i.e., the 4WD standby mode. Then, the operation mode determining unit 100 outputs 0.5 Nm, for example, as the motor torque target value (MTt) to the driver unit 120 shown in Fig. 2. By setting the output torque of the motor 5 to, e.g., 0.5 Nm so that a slight driving torque is transmitted from the motor 5 to the rear wheels, the system is held in a standby state to be quickly responsible when the operation mode is shifted to the 4-wheel-drive mode at a later point in time. The driver unit 120 outputs the generator field current control signal (C1) so that the motor torque becomes, e.g., 0.5 Nm. Details of the driver unit 120 will be described later with reference to Fig. 8.

Then, at a time t3, the accelerator opening (TVO) signal is turned off, the shift position (SFT) signal indicates the drive range, and the rear wheel speed (VWR) signal becomes slightly larger than 0 km/h so that the vehicle is brought into a creep state. In that condition, the operation mode determining unit 100 determines the operation mode (MODE) to be the operation mode 4 (MODE4), i.e., the vehicle creep mode. Then, the operation mode determining unit 100 outputs, as the motor torque target value (MTt), e.g., 1.0 Nm, which is larger than that outputted in the operation mode 3 (MODE3), i.e., the 4WD standby mode, to the driver unit 120 shown in Fig. 2. The driver unit 120 outputs the generator field current control signal (C1) so that the motor torque becomes, e.g., 1.0 Nm. As a result, a driving force is transmitted to the front wheels by the engine 1, and when the vehicle is brought into the creep state, a driving force is transmitted from the motor 5 to the rear wheels as well. Thus, the vehicle comes into the creep state with driving of the front and rear wheels.

Then, at a time t4, when the shift position (SFT) signal indicates the drive range and the accelerator opening (TVO) signal is turned on, the operation mode determining unit 100 determines the operation mode (MODE) to be the operation mode 5 (MODE5), i.e., the 4WD mode. Then, the operation mode determining unit 100 notifies the motor torque computing unit 110 of the fact that the operation mode is the operation mode 5 (MODE5), i.e., the 4WD mode.

With the accelerator opening (TVO) signal being turned on, the motor torque computing unit 110 in the accelerator responsive torque (TQAC) computing unit 111 outputs the accelerator responsive torque (TQAC) as shown in Fig. 4. Because of the vehicle speed being not higher than 5 km/h, the accelerator responsive torque (TQAC) is, e.g., 10 Nm. On the other hand, in this case, since the dry road is assumed, no slips occur in driving with the engine 1, the slip responsive torque (TQDV) computing unit 112 does not produce the slip responsive torque (TQDV). The torque changing unit 113 compares the accelerator responsive torque (TQAC) and the slip responsive torque (TQDV) with each other and outputs the larger torque as the motor torque target value (MTt). At the time t4, the output torque of the accelerator responsive torque (TQAC) computing unit 111, i.e., 10.0 Nm, is outputted. Then, as seen from the characteristic shown in Fig. 4, the motor torque target value (MTt) is maintained at 10.0 Nm until the rear wheel speed (VWR) signal reaches 5 km/h.

At a time t5, when the rear wheel speed (VWR) signal reaches 5 km/h, the motor torque target value (MTt) is reduced to, e.g., 2 Nm. Then, the DC motor target torque is linearly reduced so that the motor torque target value (MTt) becomes 0 Nm after the lapse of a predetermined time T5.

When the motor torque target value (MTt) shown at (C) in Fig. 6 reaches a predetermined torque, the operation mode determining unit 100 determines the operation mode (MODE) to be the stop sequence mode and notifies the driver unit 120 of the fact that the operation mode is the operation mode 6 (MODE6), i.e., the stop sequence mode. Herein, the term "predetermined torque" means a torque corresponding to friction caused by backlash of the differential gear and torsion of the wheel. In the stop sequence mode, the driver unit 120 executes motor rotation angle control by using a motor rotation angle control unit, described later with reference to Figs. 8 to 12, until a motor rotation angle suitable for the clutch release is reached, followed by releasing the clutch 4 and then turning off the large-capacity relay 7. Thus, at the start of the vehicle, not only the front wheels are driven by the engine 1, but also the rear wheels are driven by the motor 5, whereby the starting performance is improved with the 4-wheel-drive start.

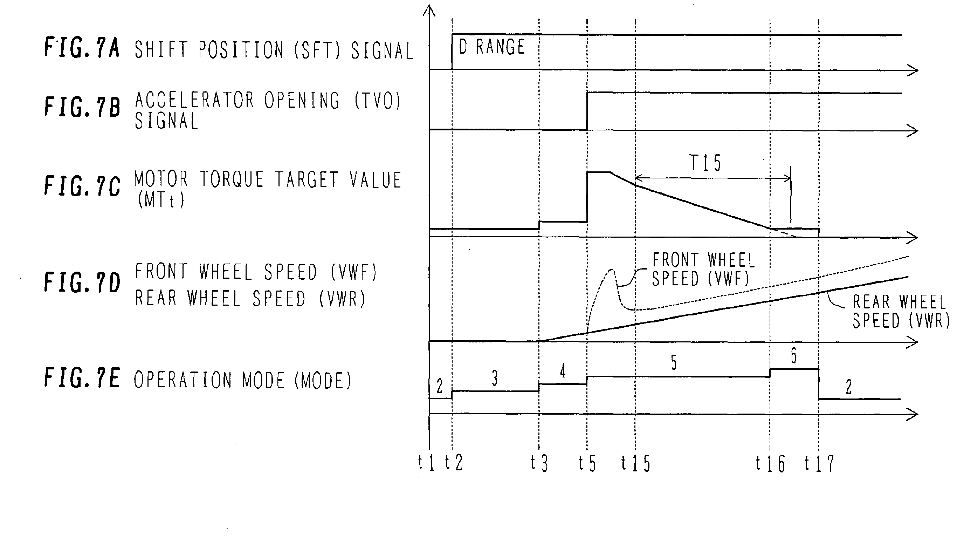

With reference to Fig. 7, a description is now made of the operation of the vehicle driving force control system of this embodiment when the vehicle runs on a low-μ road.

Fig. 7 is a timing chart showing the operation of the vehicle driving force control system according to one embodiment of the present invention when the vehicle runs on a low-μ road. Note that (A) to (E) in Fig. 6 represent the same items as (A) to (E) in Fig. 5.

The control process for a period from the time t1 to t4 is the same as that shown in Fig. 6.

At the time t4, when the shift position (SFT) signal indicates the drive range and the accelerator opening (TVO) signal is turned on, the operation mode determining unit 100 determines the operation mode (MODE) to be the operation mode 5 (MODE5), i.e., the 4WD mode. Then, the operation mode determining unit 100 notifies the motor torque computing unit 110 of the fact that the operation mode is the operation mode 5 (MODE5), i.e., the 4WD mode.

In this case, since the low-μ road is assumed, slips occur in driving with the engine 1, thus resulting in a difference between the front wheel speed (VWF) and the rear wheel speed (VWR) as shown at (D) in Fig. 7. Therefore, the slip responsive torque (TQDV) computing unit 112 in the motor torque computing unit 110 produce the slip responsive torque (TQDV) depending on the front-and-rear wheel speed difference (DV). Because of the occurrence of slips, the torque changing unit 113 outputs, as the motor torque target value (MTt), the slip responsive torque (TQDV) depending on the front-and-rear wheel speed difference (DV). Then, the slip responsive torque (TQDV) depending on the front-and-rear wheel speed difference (DV) is continuously produced until the front-and-rear wheel speed difference (DV) becomes 2 km/h or below.

When the motor torque target value (MTt) shown at (C) in Fig. 7 reaches the predetermined torque, the operation mode determining unit 100 determines the operation mode (MODE) to be the stop sequence mode and notifies the driver unit 120 of the fact that the operation mode is the operation mode 6 (MODE6), i.e., the stop sequence mode. In the stop sequence mode, the driver unit 120 executes the motor rotation angle control by using the motor rotation angle control unit, described later with reference to Figs. 8 to 12, until the motor rotation angle suitable for clutch release is reached, followed by releasing the clutch 4 and then turning off the large-capacity relay 7. Thus, at the start of the vehicle, not only the front wheels are driven by the engine 1, but also the rear wheels are driven by the motor 5, whereby the starting performance on the low-μ road is improved with the 4-wheel driving start.

Details of the motor rotation angle control executed by the vehicle driving force control system of this embodiment will be described below with reference to Figs. 8 to 12.

A description is first made of the configuration of the driver unit in the vehicle driving force control system according to one embodiment of the present invention with reference to Fig. 8.

Fig. 8 is a block diagram showing the configuration of the driver unit in the vehicle driving force control system according to one embodiment of the present invention.

The driver unit 120 comprises a motor field current target value (Ift) computing unit 121, a motor armature current target value (Iatt) computing unit 122, a motor rotation angle control unit 123, a motor armature current target value changing unit 125, and feedback control units 124, 126 for executing current feedback control of the motor field current and the motor armature current, respectively.

The motor field current target value (Ift) computing unit 121 computes a current to be applied to the field coil 5a of the motor 5 based on the motor rotation speed (Nm) signal inputted to the 4WDCU 6 shown in Fig. 2. As shown in Fig. 8, by way of example, the motor field current target value (Ift) computing unit 121 sets a motor field current target value (Ift) to 10 A when the motor rotation speed (Nm) signal is not more than N1. When the motor rotation speed (Nm) signal is in the range of N1 to N2, the motor field current target value (Ift) is gradually reduced from 10 A to 3.0 A. Further, when the motor rotation speed (Nm) signal is more than N2, the motor field current target value (Ift) is set to 3.0 A. In this way, with an increase of the rotation speed of the motor 5, the motor field current target value (Ift) computing unit 121 executes relatively weak field control for controlling the motor 5 to be able to rotate at high rotation speed. More specifically, feedback control is executed by detecting a difference between the motor field current target value (Ift) and the actually detected field current (If), and changing the current applied to the field coil 5a of the motor 5 (i.e., in this embodiment, the motor field current control signal (Dif) representing a duty ratio of a duty signal for switching a power converter) so that the difference becomes 0.

The motor armature current target value (Iatt) computing unit 122 computes, using a map, a motor armature current target value (Iatt) based on both the motor torque target value (MTt) outputted from the motor torque computing unit 110 and the motor field current target value (Ift) outputted from motor field current target value (Ift) computing unit 121.

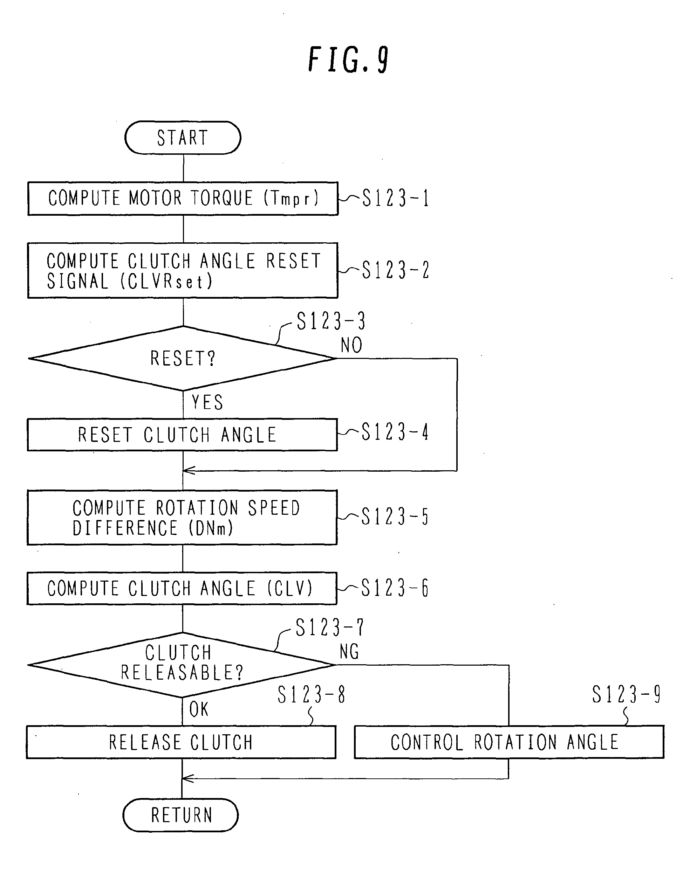

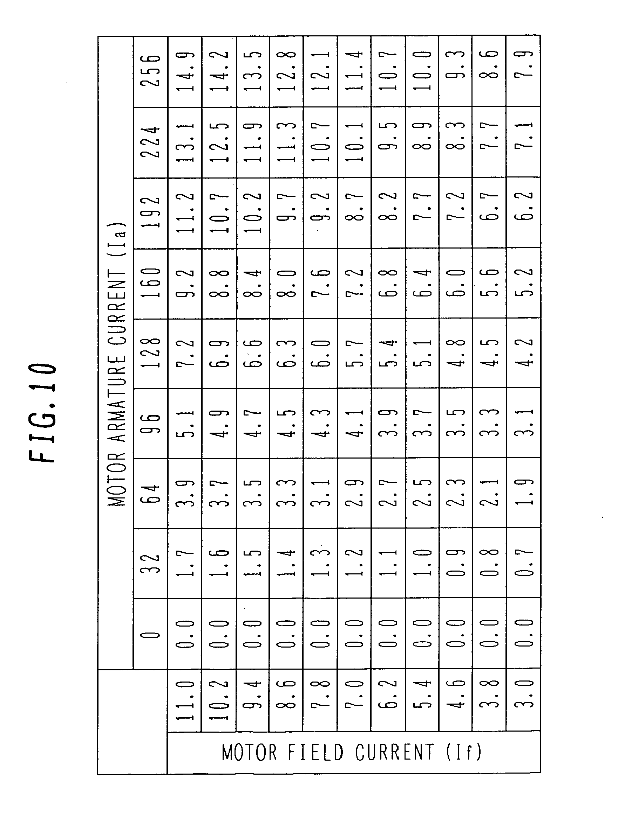

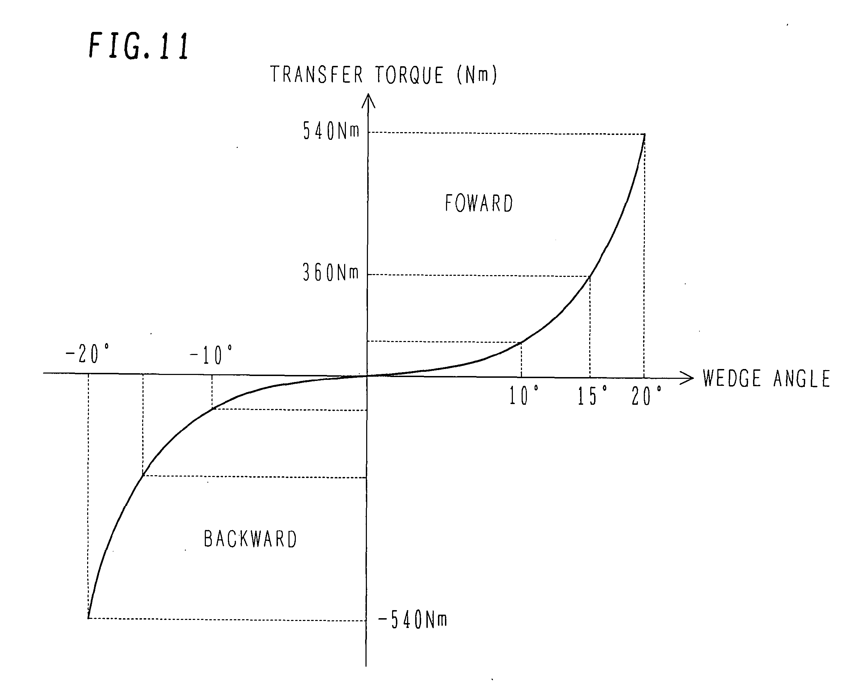

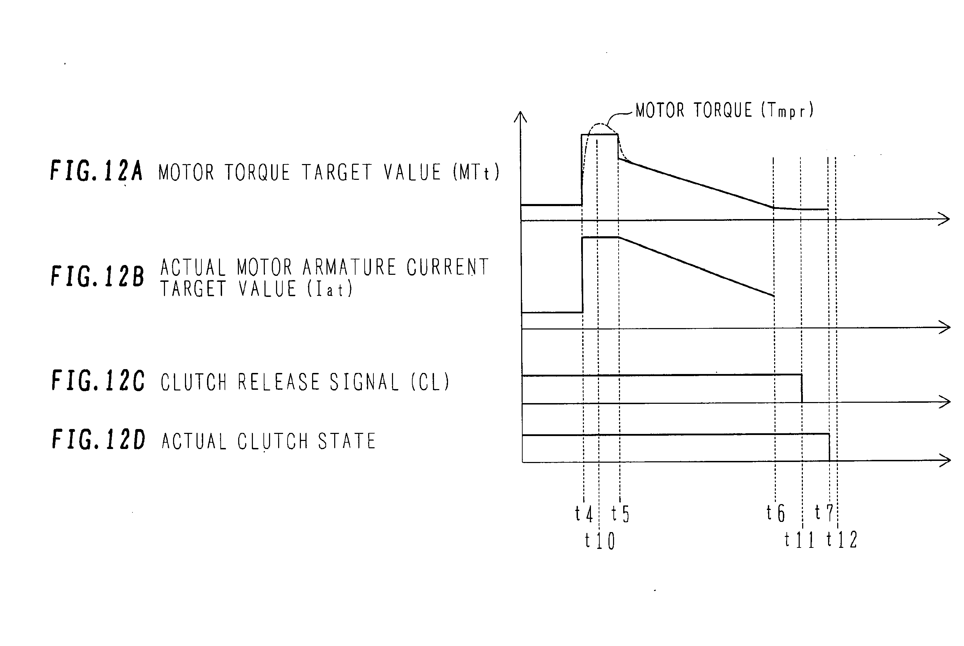

The operation of the motor rotation angle control unit 123 in the driver unit 120 of the vehicle driving force control system of this embodiment will be described below with reference to Figs. 9 to 12. Fig. 9 is a flowchart showing the operation of the motor rotation angle control unit 123 in the driver unit 120 of the vehicle driving force control system according to one embodiment of the present invention. Fig. 10 is a table for explaining one example of a motor torque computing map used in the motor rotation angle control unit 123 in the driver unit 120 of the vehicle driving force control system according to one embodiment of the present invention. Fig. 11 is a map for explaining the relationship between a wedge angle and a transmission torque of the clutch controlled by the vehicle driving force control system according to one embodiment of the present invention. Fig. 12 is a timing chart showing control procedures of the motor rotation angle control unit 123 in the driver unit 120 of the vehicle driving force control system according to one embodiment of the present invention.

In Fig. 12, (A) represents the motor torque target value (MTt) and a computed motor torque (TMpr), and (B) represents an actual motor armature current target value (Iat). Also, (C) in Fig. 12 represents the clutch control signal (CL), and (D) represents an actual clutch state. Note that the motor torque target value (MTt) shown at (A) in Fig. 12 is the same as that shown at (C) in Fig. 6.

In step S123-1, the motor rotation angle control unit 123 computes the motor torque (Tmpr) based on the motor armature current value (Ia) and the motor field current value (If) by using the motor torque computing map shown in Fig. 10.

In step S123-2, the motor rotation angle control unit 123 sets a clutch angle reset signal (CLVRset) to 1 when the computed motor torque (Tmpr) is maximized within a range not exceeding a certain rear wheel speed. More specifically, when the motor torque (Tmpr) is changed as indicated by a broken line at (A) in Fig. 12, the motor rotation angle control unit 123 compares successive values of the motor torque (Tmpr) with each other at certain time intervals to detect a maximum value. When the motor torque (Tmpr) takes the maximum value, for example, at a time t10. in Fig. 12(A), the motor rotation angle control unit 123 sets the clutch angle reset signal (CLVRset) to 1.

When the clutch angle reset signal (CLVRset) is set to 1, the motor rotation angle control unit 123 computes a clutch angle (CLV) in step S123-4 by using a clutch characteristic map shown in Fig. 11.

The clutch characteristic map shown in Fig. 11 shows the relationship between a wedge angle (°) of the clutch (i.e., a clutch angle) and a transmission torque (Nm) of the clutch. It is here assumed, for example, as shown in Fig. 1 that the clutch 4 is engaged through a connection path of motor 5 - clutch 4 - differential gear 3 - wheel axle - wheels 15R, 15L. When neither the wheels 15R, 15L are rotated, nor the motor 5 is driven, a first clutch plate on the side of the motor 5 and a second clutch plate on the side of the differential gear 3 are pressed against each other. When the motor 5 starts to rotate in such a state, the first and second clutch plates of the clutch 4 are twisted while being held in the mutually pressed state. In other words, the first and second clutch plates come into the mutually pressed state while a predetermined wedge angle is produced with respect to the state before the motor 5 has started the rotation. The torque transmitted through the clutch is changed depending on the wedge angle, and Fig. 11 shows how such a change behaves. For example, when the clutch wedge angle is 0°, the transmission torque is 0 Nm. When the clutch wedge angle is 15°, the transmission torque is 360 Nm. Further, when the clutch wedge angle is 20°, the transmission torque is 540 Nm.

Assuming, for example, that the rear wheel speed (VWR) is not more than 5 km/h at which the accelerator responsive torque is always outputted as shown in Fig. 4 and the motor torque (Tmpr) is maximized at 10 Nm, the clutch angle reset signal (CLVRset) is set to 1 by the processing in step S123-2 and the transmission torque is obtained as 360 Nm, taking into account a speed reducing ratio 36 of the differential gear 3 shown in Fig. 1. Therefore, the current clutch angle (CLV) can be computed as 15° from the clutch characteristic map shown in Fig. 11.

After the clutch angle (CLV) (i.e., the wedge angle of the clutch) has been computed in step S123-4, or if the clutch angle reset signal (CLVRset) is 0 as a result of the determining process in step S123-3, the motor rotation angle control unit 123 executes a process of computing a rotation speed difference (DNm) in next step S123-5.

More specifically, in step S123-5, the motor rotation angle control unit 123 compares the right and left rear wheel speeds with each other, taking the larger rear wheel speed as a maximum rear wheel speed (VWRM), and computing the rotation speed difference (DNm) at an engagement portion of the clutch based on the maximum rear wheel speed (VWRM) and the motor rotation speed (Nm) in consideration of the speed reducing ratio of the differential gear 3.

Assuming, for example, that the maximum rear wheel speed (VWRM) is 15 km/h, the tire dynamic radius is 0.2 m, and the speed reducing ratio of the differential gear 3 is 36, the following formula is obtained:

$$\text{rear wheel rotation speed} = \text{VWRM} \times 1000/60/(2\pi0.2)/60/1000$$

Thus, the rear wheel rotation speed is given as 0.00523r/10 ms. If the clutch 4 disposed within the differential gear 3 is mounted over the wheel axle, a clutch-shaft motor rotation speed is expressed using the motor rotation speed (Nm) as follows:

$$\text{clutch-shaft motor rotation speed} = \text{Nm}/36/60/1000$$

Accordingly, if the motor rotation speed (Nm) is 7150 r/min, the clutch-shaft motor rotation speed is given as 0.00331 r/10 ms. Thus, the rotation speed difference (DNm) is computed as 0.00192 r/10 ms from the following formula:

$$\text{rotation speed difference (DNm) = rear wheel rotation}$$

$$\text{speed - clutch-shaft motor rotation speed}$$

Assuming that the flowchart of Fig. 9 is processed at intervals of 10 ms, because 1 r/10 ms corresponds to 360°,

$$\text{clutch angle difference = 360 × rotation speed}$$

$$\text{difference (DNm)}$$

is obtained using the rotation speed difference (DNm). Thus, the clutch angle difference is 0.6912°.

Then, in step S123-6, the motor rotation angle control unit 123 executes a process of computing the clutch angle (CLV) .

More specifically, the clutch angle (CLV) is computed by adding the clutch angle difference to the previously computed clutch angle (CLV) or the clutch angle (CLV) that has been computed in the clutch angle resetting process (step S123-4) when the clutch angle reset signal (CLVRset) computed in the clutch angle reset signal (CLVRset) computing process (step S123-2) was 1.

Stated another way, the clutch angle (CLV) is given based on a default value resulting when the motor torque (Tmpr) is maximized, taking into account a change depending on the maximum rear wheel speed (VWRM) and the motor rotation speed (Nm). In this case, since the clutch angle (CLV) is computed as 15° in the clutch angle resetting process (step S123-4), the position of the current clutch angle (CLV) is computed as 14.3088° by subtracting the clutch angle difference of 0.6912° from 15°.

Then, in step S123-7, the motor rotation angle control unit 123 determines whether the clutch release is allowed or not. If the clutch release is allowed, the motor rotation angle control unit 123 executes a clutch releasing process in step S123-8, and if the clutch release is not allowed, it executes a rotation angle control process in step S123-9.

More specifically, if it is determined from the clutch characteristic map of Fig. 11 that the clutch angle (CLV) computed in the clutch angle (CLV) computing process is an angle suitable for the clutch release, a clutch release signal is set to 1. Assuming, for example, that a clutch angle in the range of $0° \pm 10°$ is suitable for the clutch release, the clutch release signal is held at 0 when the computed clutch angle (CLV) is 14.3088°, and the rotation angle control process is executed.

In the rotation angle control process of step S123-9, feedback control is executed by computing an armature current target value (Iamt) for the motor rotation angle control with the clutch angle (CLV) of 0° being a target. Thus, the motor output torque is controlled in such a manner that the armature current target value (Iamt) for the motor rotation angle control is increased as the clutch angle (CLV) increases, and the armature current target value (Iamt) for the motor rotation angle control is decreased as the clutch angle (CLV) decreases.

If the clutch angle (CLV) is determined in step S123-7 as being within the angle range (e.g., $0° \pm 10°$) suitable for the clutch release and the clutch release signal is set to 1, the clutch release process is executed in step S123-8. Additionally, the rotation speed of one input shaft (on the side connected to the motor) of the clutch and the rotation speed of the other input shaft (on the side connected to the wheel) are substantially equal to each other, and the motor rotation and the wheel rotation are synchronized with each other. Therefore, the clutch is release at the synchronized timing between the motor and the wheel.

In the clutch release process, as shown at (C) in Fig. 12, the clutch release signal (CL) is outputted to the clutch 4 at a time t11. After the clutch is actually released at a time t7 as shown at (D) in Fig. 12, the operation of the motor rotation angle control unit 123 is continued until a time t12, as shown at (B) in Fig. 12, in consideration of a response delay of the clutch. As a result, it is possible to avoid a shock caused at time of the clutch release and to prevent an increase of the motor rotation speed (Nm) after the clutch release.

The actual motor armature current target value (Iat) is computed by changing the motor armature current target value (Iatt) and the armature current target value (Iamt) for the motor rotation angle control from one to the other depending on the operation mode by the motor armature current target value changing unit 125. More specifically, when the operation mode determining unit 100 determines the operation mode (MODE) to be any of the operation mode 3 (4WD standby mode), the operation mode 4 (vehicle creep mode), and the operation mode 5 (4WD mode), the motor armature current target value (Iatt) is selected by the motor armature current target value changing unit 125 to compute the actual motor armature current target value (Iat). When the determined operation mode is the operation mode 6 (stop sequence mode), the armature current target value (Iamt) for the motor rotation angle control is selected to compute the actual motor armature current target value (Iat).

The actual motor armature current target value (Iat) is subtracted from the actually detected motor armature current target value (Ia) to compute a difference between them, and feedback control is performed by changing the current applied to the field coil of the high-output generator (ALT2) 2 (i.e., in this embodiment, the duty ratio of the duty signal for switching the power converter) so that the difference becomes 0.

With this embodiment, as described above, since the clutch is released in a state where the clutch angle is within a range suitable for the clutch release, a shock caused at the time of the clutch release can be reduced. Also, since the motor rotation angle control is continued after the clutch release, a rise of the motor rotation speed after the clutch release can be prevented.

The above embodiments can be combined in any way partly or as a whole without leaving the scope of disclosure.

## Claims

1. A vehicle driving force control system for controlling a vehicle which comprises main drive wheels driven by a main drive source, sub-drive wheels driven by a sub-drive source, and a clutch (4) disposed in a torque transmission path between said sub-drive source and said sub-drive wheels, said clutch (4) being controlled to be engaged in a 4-wheel-drive state and released in a 2-wheel-drive state,
wherein said control system includes clutch release means for, at the time of a shift from the 4-wheel-drive state to the 2-wheel-drive state, bringing said clutch (4) into the released state when a clutch angle of an engagement portion of said clutch (4) is within a predetermined range.

2. The vehicle driving force control system according to Claim 1, wherein said control system further includes rotation angle control means (123) for, at the time of a shift from the 4-wheel-drive state to the 2-wheel-drive state, controlling an output torque of said sub-drive source so that the clutch angle of the engagement portion of said clutch (4) takes a predetermined value within said predetermined range.

3. The vehicle driving force control system according to Claim 2, wherein said rotation angle control means (123) increases a voltage or current of a motor (5) serving as said sub-drive source when a rotation speed of said sub-drive source is larger than a rotation speed of said sub-drive wheels in the engagement portion of said clutch (4), and decreases the voltage or current of the motor (5) serving as said sub-drive source when the rotation speed of said sub-drive source is smaller than the rotation speed of said sub-drive wheels.

4. The vehicle driving force control system according to Claim 2 or 3, wherein said rotation angle control means (123) continues the output torque control for said sub-drive source after outputting of a clutch release command from said clutch release means until said clutch (4) is actually released.

5. A vehicle driving force control system for controlling a vehicle which comprises main drive wheels driven by a main drive source, sub-drive wheels driven by a sub-drive source, and a clutch (4) disposed in a torque transmission path between said sub-drive source and said sub-drive wheels, said clutch (4) being controlled to be engaged in a 4-wheel-drive state and released in a 2-wheel-drive state,
wherein said control system includes clutch release means for, at the time of a shift from the 4-wheel-drive state to the 2-wheel-drive state, bringing said clutch (4) into the released state after synchronizing rotation of said sub-drive source and rotation of said sub-drive wheels with each other.

# FIG.1

# FIG.2

WHEEL SPEED (VW) SIGNAL →

ACCELERATOR OPENING
(TVO) SIGNAL →

SHIFT POSITION
(SFT) SIGNAL →

MOTOR ARMATURE CURRENT
(Ia) SIGNAL →

MOTOR FIELD CURRENT
(If) SIGNAL →

MOTOR ROTATION SPEED
(Nm) SIGNAL →

6

4WD CONTROL UNIT

OPERATION MODE
DETERMINING UNIT ～100

120

DRIVER UNIT

MOTOR TORQUE
COMPUTING UNIT ～110

→ GENERATOR FIELD CURRENT
CONTROL SIGNAL (C1)

→ MOTOR FIELD CURRENT
CONTROL SIGNAL (Dif)

→ RELAY DRIVING SIGNAL (RLY)

→ CLUTCH CONTROL SIGNAL (CL)

# FIG. 3

WHEEL SPEED (VW) SIGNAL →

ACCELERATOR OPENING (TVO) SIGNAL →

110

MOTOR TORQUE COMPUTING UNIT

ACCELERATOR RESPONSIVE TORQUE (TQAC) COMPUTING UNIT ~111

113
TORQUE CHANGING UNIT

SLIP RESPONSIVE TORQUE (TQDV) COMPUTING UNIT ~112

→ MOTOR TORQUE TARGET VALUE (MTt)

EP 1 669 237 A2

# FIG.4

ACCELERATOR RESPONSIVE TORQUE (TQAC)

10Nm

0

5km/h

REAR WHEEL SPEED (VWR)

# FIG.5

SLIP RESPONSIVE TORQUE (TQDV)

10Nm

0

2km/h          7km/h

SPEED DIFFERANCE (DV)
BTWEEN FRONT AND REAR
WHEELS SPEED =
FRONT WHEELS SPEED (VWF) -
REAR WHEELS SPEED (VWR)

*FIG.6A* SHIFT POSITION (SFT) SIGNAL

D RANGE

*FIG.6B* ACCELERATOR OPENING (TVO) SIGNAL

*FIG.6C* MOTOR TORQUE TARGET VALUE (MTt)

T5

*FIG.6D* FRONT WHEEL SPEED (VWF) REAR WHEEL SPEED (VWR)

*FIG.6E* OPERATION MODE (MODE)

2    3    4    5    6    2

t1 t2    t3    t4  t5 t6    t7

EP 1 669 237 A2

EP 1 669 237 A2

**FIG.7A** SHIFT POSITION (SFT) SIGNAL

**FIG.7B** ACCELERATOR OPENING (TVO) SIGNAL

**FIG.7C** MOTOR TORQUE TARGET VALUE (MTt)

**FIG.7D** FRONT WHEEL SPEED (VWF) REAR WHEEL SPEED (VWR)

**FIG.7E** OPERATION MODE (MODE)

D RANGE

T15

FRONT WHEEL SPEED (VWF)

REAR WHEEL SPEED (VWR)

2    3    4    5    6    2

t1 t2    t3  t5  t15    t16 t17

# FIG. 8

# FIG.9

START

COMPUTE MOTOR TORQUE (Tmpr) ⟶ S123-1

COMPUTE CLUTCH ANGLE RESET SIGNAL (CLVRset) ⟶ S123-2

S123-3

RESET?  NO

YES

RESET CLUTCH ANGLE ⟶ S123-4

COMPUTE ROTATION SPEED DIFFERENCE (DNm) ⟶ S123-5

COMPUTE CLUTCH ANGLE (CLV) ⟶ S123-6

S123-7

CLUTCH RELEASABLE?  NG

OK    S123-8    S123-9

RELEASE CLUTCH    CONTROL ROTATION ANGLE

RETURN

# FIG.10

| | | MOTOR ARMATURE CURRENT (Ia) | | | | | | | | |
|---|---|---|---|---|---|---|---|---|---|---|
| | | 0 | 32 | 64 | 96 | 128 | 160 | 192 | 224 | 256 |
| MOTOR FIELD CURRENT (If) | 11.0 | 0.0 | 1.7 | 3.9 | 5.1 | 7.2 | 9.2 | 11.2 | 13.1 | 14.9 |
| | 10.2 | 0.0 | 1.6 | 3.7 | 4.9 | 6.9 | 8.8 | 10.7 | 12.5 | 14.2 |
| | 9.4 | 0.0 | 1.5 | 3.5 | 4.7 | 6.6 | 8.4 | 10.2 | 11.9 | 13.5 |
| | 8.6 | 0.0 | 1.4 | 3.3 | 4.5 | 6.3 | 8.0 | 9.7 | 11.3 | 12.8 |
| | 7.8 | 0.0 | 1.3 | 3.1 | 4.3 | 6.0 | 7.6 | 9.2 | 10.7 | 12.1 |
| | 7.0 | 0.0 | 1.2 | 2.9 | 4.1 | 5.7 | 7.2 | 8.7 | 10.1 | 11.4 |
| | 6.2 | 0.0 | 1.1 | 2.7 | 3.9 | 5.4 | 6.8 | 8.2 | 9.5 | 10.7 |
| | 5.4 | 0.0 | 1.0 | 2.5 | 3.7 | 5.1 | 6.4 | 7.7 | 8.9 | 10.0 |
| | 4.6 | 0.0 | 0.9 | 2.3 | 3.5 | 4.8 | 6.0 | 7.2 | 8.3 | 9.3 |
| | 3.8 | 0.0 | 0.8 | 2.1 | 3.3 | 4.5 | 5.6 | 6.7 | 7.7 | 8.6 |
| | 3.0 | 0.0 | 0.7 | 1.9 | 3.1 | 4.2 | 5.2 | 6.2 | 7.1 | 7.9 |

EP 1 669 237 A2

## FIG.11

EP 1 669 237 A2

FIG.12A MOTOR TORQUE TARGET VALUE (MTt)

MOTOR TORQUE (Tmpr)

FIG.12B ACTUAL MOTOR ARMATURE CURRENT
TARGET VALUE (Iat)

FIG.12C CLUTCH RELEASE SIGNAL (CL)

FIG.12D ACTUAL CLUTCH STATE

t4  t5          t6   t7
t10            t11 t12